# EUROPÄISCHE PATENTANMELDUNG

(11) **EP 1 935 231 A1**
(43) Veröffentlichungstag der Anmeldung: **25.06.2008**
(21) Anmeldenummer: 07117018.7
(22) Anmeldetag: 24.09.2007
(51) Int. Cl.: A01F 12/40, A01F 29/20

(54) **Häckselmesser für landwirtschaftliche Erntemaschinen**

(30) Priorität: 20.12.2006 DE 102006060956
(71) Anmelder: CLAAS Selbstfahrende Erntemaschinen GmbH, 33428 Harsewinkel (DE)
(72) Erfinder: Niermann, Martin, 33428 Harsewinkel (DE); Terörde, Stefan, 48231 Warendorf (DE)
(74) Vertreter: Ellerbrächter, Dirk

(57) **Zusammenfassung**

Die Erfindung betrifft ein Häckselmesser 1 für landwirtschaftliche Ernternaschinen mit einem Grundkörper 2, welcher zumindest eine Lagerbohrung 3 zur Lagerung des Häckselmessers 1 an einem Halter aufweist, und wobei zumindest eine Seitenkante des Hackselmessers 1 als Schneidkante 4 ausgebildet ist

Aufgabe der vorliegenden Erfindung ist es, ein Häckselmesser derart weiterzubilden, dass es im Einsatz im Vergleich zu den aus der Praxis bekannten Hackselmessem eine erhöhte Standzeiten aufweist.

Diese Aufgabe wird dadurch gelöst, dass das Häckselmesser 1 zumindest bereichsweise zwei flächenhaft aneinanderliegende Schneidenträger 5,5 aufweist, zwischen denen zumindest bereichsweise im Bereich der Schneidkante 4 zumindest ein Schneidelement 6 angeordnet ist

## Beschreibung

Die Erfindung betrifft ein Häckselmesser für landwirtschaftliche Erntemaschinen nach dem Oberbegriff des Anspruchs 1.

Derartige Häckselmesser werden in der Praxis in unterschiedlichen landwirtschaftlichen Erntemaschinen eingesetzt, in der EP 1 247 443 A1 ist beispielhaft der Einsatz in einer Häckseleinrichtung für einen Mähdrescher offenbart, in der das ausgedroschene Stroh mittels Häckseln zerkleinert wird, um es beispielsweise auf dem abgeernteten Feld zu verteilen. Die Häckselmesser könnten jedoch auch bei einem Häcksler zum Ernten von Feldfrüchten, Grünfutter und dergleichen eingesetzt werden. Nachteilig an den aus der Praxis bekannten Häckselmessern ist es, dass sie im Einsatz relativ schnell stumpf werden, wodurch das Schnittverhalten und die zum Häckseln benötigte Leistung negativ beeinflusst werden, Ein Nachschleifen der Häckselmesser ist zwar möglich, jedoch bedeutet dieses Ausfallzeiten für die landwirtschaftliche Erntemaschine.
Um diesem bekannten Nachteil entgegenzuwirken, weisen ebenfalls aus der Praxis bekannte Häckselmesser an ihren Schnittkanten Hartstoffbeschichtungen auf, die die Standzeiten wesentlich verlängern sollen. Derartige Häckselmesser sind beispielweise in der EP 0 878 123 B1 offenbart. Nachteilig an mit Hartstoffschichten an den Schnittkanten versehenen Häckselmessern ist es jedoch, dass bei Vermischung des Schnittgutes mit harten Anteilen, wie z.B. Steinen oder metallischen Gegenständen, die Hartstoffschichten durch schlagartige Berührung mit den harten Anteilen großflächig ausbrechen, so dass dadurch ihre Standzeiten verringert werden und sie häufig ausgetauscht werden müssen.

Aufgabe der vorliegenden Erfindung ist es, ein Häckselmesser für landwirtschaftliche Erntemaschinen derart weiterzubilden, dass es im Einsatz im Vergleich zu den aus der Praxis bekannten Häckselmessern eine erhöhte Standzeiten aufweist.

Diese Aufgabe wird in Verbindung mit den Merkmalen des Oberbegriffs des Anspruchs 1 dadurch gelöst, dass das Häckselmesser zumindest bereichsweise zwei flächenhaft aneinanderliegende Schneidenträger aufweist, zwischen denen zumindest bereichsweise im Bereich der Schneidkante zumindest ein Schneidelement angeordnet ist.
Dadurch, dass das zumindest eine Schneidelement zwischen Schneidenträgern angeordnet ist, ist es auch bei schlagartiger Berührung mit harten Anteilen gegen das Ausbrechen von großflächigen Teilstücken geschützt, so dass sich die Standzeit des Häckselmessers aufgabengemäß erhöht.

Bei einer vorteilhaften Weiterbildung der Erfindung bestehen die Schneidenträger aus einem weicheren Material als das zumindest eine Schneidelement, so dass während des Einsatzes die Schneidenträger allmählich abgenutzt werden und ein sogenannter Selbstschärfeffekt eintritt. Wenn durch schlagartige Berührung mit harten Anteilen kleinere Stücke des Schneidelementes ausbrechen sollten, nutzt sich an diesen Stellen das weichere Material der Schneidenträger entsprechend noch schneller ab, so dass sehr schnell wieder verbliebene Bereiche des Schneidelementes frei liegen und eine scharfe Schneidkante bilden,

Um den Verschleiß des Schneidelementes stark zu verringern und somit aufgabengemäß die Standzeit zu erhöhen, besteht das Schneidelement bei einer vorteilhaften Weiterbildung der Erfindung aus einem verschleißfesten Werkstoff, vorzugsweise aus Wolfram-Carbid, wobei diese Materialangabe als eine mögliche Lösung und nicht als Einschränkung für den Erfindungsgedanken anzusehen ist.

Eine vorteilhafte Ausbildung der Erfindung weist eine auf zumindest einen Schneidenträger aufgebrachte Schicht als Schneidelement auf, wodurch die Weiterverarbeitung der Schneidenträger wesentlich vereinfacht wird, da die Schicht fest mit dem Schneidenträger verbunden ist. Das Aufbringen der Schicht auf die Schneidenträger kann mittels aus der Praxis vielfältig bekannten Beschichtungsmethoden erfolgen.

Bei einer anderen vorteilhaften Ausbildung der Erfindung ist das Schneidelement als ein zwischen den Schneidenträgern angeordnetes flächen- oder streifenförmiges Element ausgebildet, was den Vorteil bietet, dass die Einzelteile des Häckselmessers sehr schnell und einfach miteinander verbindbar sind. Vorteilhaft ist das Schneidelement mit zumindest einem der Schneidenträger unlösbar verbunden, was das Handling bei der Herstellung der Häckselmesser vereinfacht und zusätzlich einen dauerhaft festen Halt des Schneidelementes mit den Schneidenträgern gewährleistet. Die unlösbare Verbindung zwischen Schneidelement und Schneidenträger kann beispielsweise mittels Schweißen erfolgen.

Ein sehr einfacher Aufbau des Häckselmessers ergibt sich bei einer vorteilhaften Ausbildung der Erfindung dadurch, dass die Schneidenträger lösbar miteinander verbunden sind. Diese lösbare Verbindung kann beispielsweise mittels Schrauben oder dergleichen erfolgen, Durch eine lösbare Verbindung der Schneidenträger ergibt sich die Möglichkeit, im Bedarfsfall nur das schneidelement oder nur einen Schneidenträger des Häckselmessers auszutauschen.

Bei einer anderen Ausführungsform der Erfindung sind die Schneidenträger unlösbar miteinander verbunden, was den Vorteil bietet, dass ein derartiges Häckselmesser sehr gut den starken mechanischen Beanspruchungen stand hält. Die unlösbare Verbindung kann beispielsweise mittels Schweißen oder Walzen erfolgen, Weiterhin ist es denkbar, dass nur ein Teil des Grundkörpers als Schneidenträger ausgebildet ist und die beiden Schneidenträgerhälften mittels einwalzen oder einfräsen einer Nut in den Grundkörper erzeugt werden, Nach Einbringen des Schneidelementes wird die Nut dann mittels Walzen derart bearbeitet, dass das Schneidelement gleichmäßig dick und dauerhaft fest in dem Grundkörper angeordnet ist und die Scheidkante bildet.

Anhand der beigefügten Zeichnungen wird die Erfindung nachfolgend näher erläutert.
Es zeigen:
- Fig. 1:: ein Häckselmesser,
- Fig. 2:: eine Seitenansicht des in Figur 1 dargestellten Häckselmessers und
- Fig. 3:: einen Ausschnitt einer vergrößerten Schnittdarstellung gemäß dem Schnitt A-A aus Figur 2.

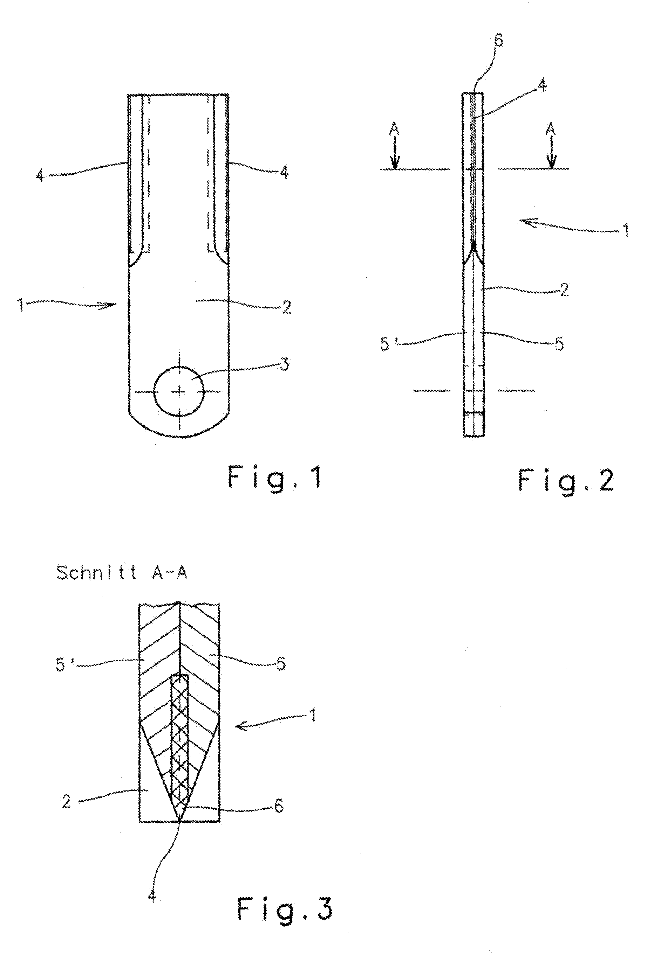

In Figur 1 ist eine Seitenansicht eines Häckselmessers 1 dargestellt. In den Grundkörper 2 ist eine Lagerbohrung 3 eingebracht, mittels der das Häckselmesser 1 an einem entsprechenden Halter der landwirtschaftlichen Erntemaschine festsetzbar ist. Zwei sich gegenüberliegende Schmalseiten des Grundkörpers 2 sind als Schneidkanten 4 ausgebildet und verjüngen sich entsprechend nach Außen hin,
Wie aus Figur 2 zu erkennen ist, ist der Grundkörper 2 des Häckselmessers 1 aus zwei flächenhaft aneinanderliegenden Schneidenträgern 5,5'zusanrimengesetxt, zwischen denen im Bereich der Schneidkante 4 ein Schneidelement 6 angeordnet ist Bei der Herstellung wird das Schneidelement 6 beispielsweise als blechartiges Wolfram-Carbit-Element zwischen den Schneidenträgern 5,5' aus Stahl eingelegt und dann wird der aus den beiden Schneidenträgern 5,5' und dem Schneidelement 6 bestehende Grundkörper 2 mittels Walzen unlösbar miteinander verbunden.
In Figur 3 ist ein Ausschnitt des Häckselmessers 1 in einer vergrößerten Schnittdarstellung gemäß dem Schnitt A-A aus Figur 2 dargestellt. Die beiden Schneidenträger 5,5' des Grundkörpers 2 liegen flächenhaft aneinander und sind an ihren Außenflächen zur Schneidkante 4 hin verjüngt ausgebildet. Im Bereich der Schneidkante 4 ist das Schneidelement 6 zwischen den Schneidenträgern 5,5' angeordnet und überragt diese geringfügig, um eine Schneide für das Häckselgut zu bilden. Im Einsatz nutzt sich das weichere Material der Schneidenträger 5,5' schneller als das verschleißfeste Material des Schneidelementes 6 ab, so dass dauerhaft ein Selbstschärfeffekt entsteht. Durch die doppelseitige Einfassung des Schneidelementes 6 zwischen den Schneidenträgern 5,5' ist das Schneidelement 6 gegen Übermäßige mechanische Belastung durch harte Anteile im Häckselgut geschützt, so dass sich die Standzeit gegenüber aus dem Stand der Technik bekannten Häckselmessern entsprechend verlängert.

### Bezugszeichenliste:

- 1: Häckselmesser
- 2: Grundkörper
- 3: Lagerbohrung
- 4: Schneidkante
- 5: Schneidenträger
- 5': Schneidenträger
- 6: Schneidelement

## Patentansprüche

1. Häckselmesser 1 für landwirtschaftliche Erntemaschinen mit einem Grundkörper 2, welcher zumindest eine Lagerbohrung 3 zur Lagerung des Häckselmessers 1 an einem Halter aufweist, und wobei zumindest eine Seitenkante des Häckselmessers 1 als Schneidkante 4 ausgebildet ist,
**dadurch gekennzeichnet,**
**dass** das Häckselmesser 1 zumindest bereichsweise zwei flächenhaft aneinanderliegende Schneidenträger 5,5' aufweist, zwischen denen zumindest bereichsweise im Bereich der Schneidkante 4 zumindest ein Schneidelement 6 angeordnet ist.

2. Häckselmesser 1 für landwirtschaftliche Erntemaschinen nach Anspruch 1,
**dadurch gekennzeichnet,**
**dass** die Schneidenträger 5,5' aus einem weicheren Material als das zumindest eine Schneidelement 6 bestehen,

3. Häckselmesser 1 für landwirtschaftliche Erntemaschinen nach einem der vorstehenden Ansprüche,
**dadurch gekennzeichnet,**
**dass** das Schneidelement 6 aus einem verschleißfesten Werkstoff, vorzugsweise aus Wolram-Carbid besteht.

4. Häckselmesser 1 für landwirtschaftliche Erntemaschinen nach einem der vorstehenden Ansprüche,
**dadurch gekennzeichnet,**
**dass** das Schneidelement 6 als eine auf zumindest einen der Schneidenträger 5,5' aufgebrachte Schicht ausgebildet ist.

5. Häckselmesser 1 für landwirtschaftliche Erntemaschinen nach einem der Ansprüche 1 bis 3,
**dadurch gekennzeichnet,**
**dass** das Schneidelement 6 als ein zwischen den Schneidenträgern 5,5' angeordnetes flächen- oder streifenförmiges Element ausgebildet ist.

6. Häckselmesser 1 für landwirtschaftliche Erntemaschinen nach Anspruch 5,
**dadurch gekennzeichnet,**
**dass** das Schneidelement 6 mit zumindest einem der Schneidenträger 5,5' unlösbar verbunden ist

7. Häckselmesser 1 für landwirtschaftliche Erntemaschinen nach einem der vorstehenden Ansprüche,
**dadurch gekennzeichnet,**
**dass** die Schneidenträger 5,5' lösbar miteinander verbunden sind,

8. Häckselmesser 1 für landwirtschaftliche Erntemaschinen nach einem der Ansprüche 1 bis 6,
**dadurch gekennzeichnet,**
**dass** die Schneidenträger 5,5' unlösbar miteinander verbunden sind.
